# EUROPEAN PATENT SPECIFICATION

(11) **EP 1 864 084 B1**
(45) Date of publication and mention of the grant of the patent: **11.09.2013**
(21) Application number: 06733138.9
(22) Date of filing: 09.03.2006
(51) Int. Cl.: G08G 1/13, G08G 1/137, G08G 1/123, G08G 1/127, G08G 1/00, G08G 1/0968, G01C 21/36

(54) **VEHICLE LOCATION AND NAVIGATION SYSTEM**
FAHRZEUGLOKALISIERUNGS- UND NAVIGATIONSSYSTEM
SYSTEME DE LOCALISATION ET DE NAVIGATION POUR VEHICULE

(30) Priority: 10.03.2005 NZ 53879605
(43) Date of publication of application: 12.12.2007
(73) Proprietor: Navman Wireless North America LP, Glenview, IL 60026 (US)
(72) Inventor: NEWBY, Robert Matthew, Auckland (NZ); ANNETT, David Allen, Auckland (NZ); BERRY, Mark Jonathan, Auckland (NZ); O'MEAGHER, Brent Peter, Auckland (NZ); HARVEY, Kevin Scott, Auckland (NZ)
(74) Representative: Smee, Anthony James Michael
(86) International application number: PCT/NZ2006/000043
(87) International publication number: WO 2006/096077

(56) References cited:
- US-A1- 2004 027 258
- US-B1- 6 351 697
- US-B1- 6 456 207
- PATENT ABSTRACTS OF JAPAN vol. 2003, no. 12 & JP 2004 245630 A (MATSUSHITA ELECTRIC IND CO LTD) 02 September 2004
- PATENT ABSTRACTS OF JAPAN vol. 1996, no. 12 & JP 08 221 696 A (MATSUSHITA ELECTRIC IND CO LTD) 30 August 1996

## Description

### TECHNICAL FIELD

The present invention relates to vehicle location and navigation in the context of Fleet Tracking or Telematics, or Automatic Vehicle Location and in particular providing in-vehicle navigation assistance towards remotely selected destinations.

### BACKGROUND ART

It is known in the art of Fleet Tracking or Telematics to provide Automatic Vehicle Location (AVL). Typically a vehicle is fitted with a GPS receiver and a communications device which sends the vehicle location back to a central location (server) along with information such as vehicle speed and heading. In such systems information can also be sent back to the device in the vehicle, including text messages, which can be displayed for the user to read. Typically such messages might include a destination selected by a user at the server or a server client.

GPS-based vehicle navigation devices are well known. Such devices typically allow a user to select a destination and the device will then calculate a route from the current vehicle location to the destination and provide (orally and visually) instructions to reach the destination.

It would be desirable to provide a system which combines the functionality of both fleet tracking and navigation devices as described above to thereby produce in-vehicle destination routing for destinations selected remotely, for example, from the server.

US 6,748,318 (Arrivalstar Inc) discloses an advance notification system which notifies users of the impending arrival of a vehicle, for example, an overnight package delivery vehicle, at a particular vehicle stop. The system generally includes an on-board vehicle control unit (VCU) for each vehicle and a base station control unit (BSCU) for sending messages to user computers in order to inform the users when the vehicle resides at a certain predefined time period, distance, prior stop, and/or location point from the vehicle stop. Moreover, vehicle tracking, the BSCU, a computer network (e.g., the Internet), and software located on a user computer may be combined in a plurality of configurations for launching and communicating a message of the impending arrival of a particular vehicle before it arrives. Significantly, the computer message is to advise of the impending arrival and preferably will exhibit a distinctive display and/or sound on the recipient computer so that the recipient is informed of the message. The VCU sends vehicle location and/or stop information to the BSCU. The BSCU compares the vehicle route stop list with route management software, then determines when to send an impending arrival message by preferences, normally chosen by the system operator or a user preparing to receive the advance notification message. The user computer displays information associated with the impending arrival of a vehicle in the form of the name of the vehicle, when the vehicle has finished a previous delivery, the miles before a stop, the time before arriving, and/or an actual location of a vehicle when a vehicle reaches a certain point/place. Additionally, other addressable communication devices could be used in place of or in addition to the computer message, such as personal pagers, mobile telephones, television box de-scramblers, etc. Users may also contact the computer site and/or computer address for impending arrival information.

US 5,760,742 (Trimble Navigation Ltd) discloses an integrated geographic information and automatic position locating system. In one embodiment, a communication link is provided between a vehicle and at least one base station. A vehicle position tracking system, coupled to a vehicle to be monitored, is connected to the communication link. Likewise, a geographic mapping system also disposed within the vehicle is connected to the communication link. The vehicle position tracking system and the geographic mapping system are housed in a portable data terminal. The portable data terminal is removably placed into a docking station located within the vehicle. The integrated vehicle position tracking system and geographic mapping system function both when placed in the docking station, and when removed from the docking station. Thus, the present invention provides a mobile integrated vehicle position tracking system and the geographic mapping system integrated into a portable data terminal. Furthermore, in the present embodiment, the communication link provided between the vehicle and at least one base station can be accessed and utilized even when the portable data terminal is not located within the docking station.

US 5,955,973 (Concord Inc) discloses a location system for a vehicle moving within an area at a selected speed and in a selected direction. A heading sensor provides a heading signal representing the direction of movement of the vehicle. A speed sensor provides a speed signal based on available reference signals representing the speed of the vehicle. A storage device stores initial position data representing a selected initial position of the vehicle and checkpoint data representing a navigation checkpoint location. A database stores a plurality of records which each include geographic information data representing selective aspects of the area. A processor estimates a current position signal representing an estimated current position of the vehicle based on values of the heading signal, values of the speed signal, the initial position signal, and on previous values of the current position signal. Values of the current position signal correspond to records stored in the data base. A correction device selectively corrects the current position signal based on selected position inputs which indicate an approximate vehicle position relative to the navigation checkpoint location. An alerting device obtains an alerting signal indicating that the vehicle has reached a selected region within the area based on the current position signal and the geographic information data.

US 6,373,430 (Gamin Corporation) discloses a portable GPS/radio unit that communicates over a wireless radio network with at least one other unit which is transmitting radio signals over the network indicative of that unit's location. The GPS/radio unit comprises a GPS receiver for receiving satellite signals from a plurality of satellites, a radio receiver for receiving the radio signals transmitted by the other unit, a processor for calculating the unit's location as a function of the received satellite signals and for identifying the location of the other unit based on the received radio signals, and a display for indicating the location of the other unit. The display may indicate the respective locations of multiple units and may also display unique identifiers for each of the units. A system and method for indicating the location of one portable GPS/radio unit on the display of another portable GPS/radio unit involves at least two such units communicating with one another over a wireless radio network.

WO2004/059996 (Nokia Corporation) discloses methods of providing services in dependence on the geographical location of mobile terminals in a cellular network. Mobile communication terminals for use with a cellular network are able to receive or provide services in dependence of their geographical position obtained through interaction with the cellular network.

None of these prior art systems integrate the functionality of AVL systems with in vehicle navigation systems.

US2004/0027258A1 discloses a system in which a controller obtains vehicle location information from a website and then sends destination location information to a vehicle from a console.

### DISCLOSURE OF THE INVENTION

It is therefore an object of the present invention to provide a system which goes some way to achieving the above mentioned desideratum, overcoming any disadvantages in the prior art or which at least provide the public with a useful choice.

Accordingly in a first aspect the invention consists in an automatic vehicle location and navigation system comprising:
at a base location:
   a base server; and
   at least one server client in communication with the base server,
the at least one server client configured to:
   receive vehicle position data from the base server;
   display the vehicle position data to a user;
      receive at least one desired vehicle destination from the user; and
transmit the at least one desired vehicle destination to the base server;
   and in at least one vehicle:
a position determining means which provides an indication of the current position said at least one vehicle,
a transmitter which transmits said current position to said server,
a receiver which receives at least one desired destination for said vehicle from said base server, and
a navigation device which receives as inputs said at least one desired destination from said receiver and said current position from said position determining means,
said navigation device configured to determine a route from said current position to said at least one desired destination based on selected criteria.

In a second aspect the invention consists in a method of vehicle despatch comprising the steps of:
receiving vehicle position data at at least one server client from a base server in communication with the at least one server client, the base server and the at least one server client located at a base location;
displaying, on the at least one server client, the vehicle position data to a user;
receiving, at the at least one server client, at least one desired vehicle destination from the user;
the at least one server client transmitting the at least one desired vehicle destination to the base server;
the base server transmitting said at least one desired vehicle destination to said at least one vehicle,
displaying said desired vehicle destinations on a map in the vehicle,
calculating in the vehicle a route to the at least one desired destination based on selected criteria, and
displaying said route in the vehicle.

The invention may include a vehicle mounted device for an automatic vehicle location and navigation system controlled from a central server comprising:
(a) a position determining means which provides an indication of the current position of the vehicle,
(b) a transmitter which transmits said current position to said server,
(c) a receiver which receives at least one desired destination for said vehicle from said server,
(d) a navigation device which receives as inputs said at least one desired destination from said receiver and said current position from said position determining means.

The invention consists in the foregoing and also envisages constructions of which the following gives examples only.

### BRIEF DESCRIPTION OF THE DRAWINGS

One preferred form of the present invention will now be described with reference to the accompanying drawings in which;
Figure 1 is a block diagram of the architecture according to one embodiment of the present invention;
Figure 2 is a block diagram of the architecture according to an alternative embodiment of the present invention;
Figure 3 is a flow diagram of the operational process according to one embodiment of creating a message with an embedded location on a client PC and sending to a remote the navigation device;
Figure 4 is a block diagram of an architecture of the GPS locator;
Figure 5 is a block diagram of an architecture of the modem;
Figure 6 is a block diagram of an architecture of the central server;
Figure 7 is a block diagram of an architecture of the navigation device;
Figure 8 is a flow diagram of an operational process of obtaining the vehicle location;
Figure 9 is a flow diagram of an operational process of communications between the vehicle and the central server;
Figure 10 is a flow diagram of an operational process of automatic vehicle location and client application; and
Figure 11 is a flow diagram of an operational process of providing navigation assistance to the remote selected destination.

### MODES FOR CARRYING OUT THE INVENTION

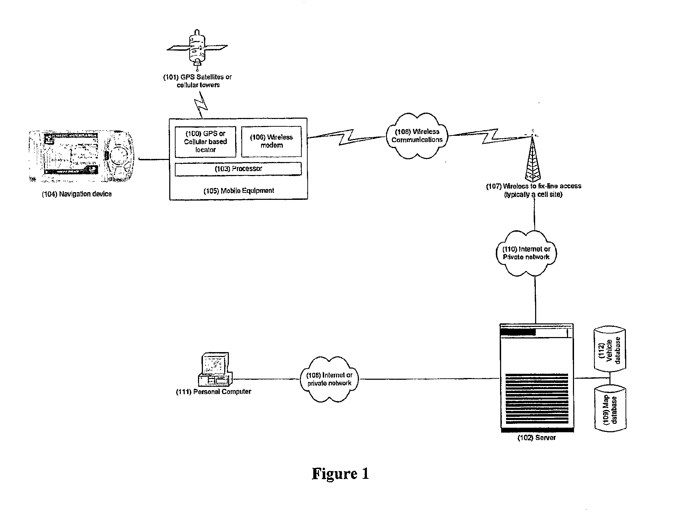

An overview of the present invention can be appreciated from the embodiment shown in Figure 1. The system includes a GPS based receiver or locator 100, a central or base server 102 and a navigation device 104. Typically the GPS based locator 100 and the navigation device 104 are fitted to a vehicle. "Vehicle" as used herein means any form of transportation, for example, pedestrian, bicycle, motor vehicle or boat.

In one embodiment the GPS based locator 100 is connected, via a controlling processor 103, to a wireless modem 106 that communicates with the central server 102 via a wireless link 108 and/or via a convention network 110. The navigation device 104, GPS based locator 100 and wireless modem 106 are linked together, and may be physically separate devices operating together in the system, or combined together into a single device, or a lesser number of devices, without departing from the invention.

The central base server 102 remote from the vehicles provides the interface between a client application 111, a database 112 and various vehicles managed by that server. Messages received from the vehicles are stored in the database 112. Messages sent from the client 111 to vehicles are routed by the server 102, as well as being stored in the database 112

The client application 111 provides an interface for the user at base to view vehicle locations, and to allow the user to send messages to each vehicle. In accordance with the present invention these messages will include desired destinations for each vehicle.

### Architecture

### GPS Locator

In the preferred embodiment of the present invention vehicle location is determined using a GPS locator installed in or associated with the vehicle. Other location techniques such as cellular triangulation, dead reckoning could be employed. Latitude and Longitude are preferred location attributes, although street location, altitude and/or map coordinates could also be provided.

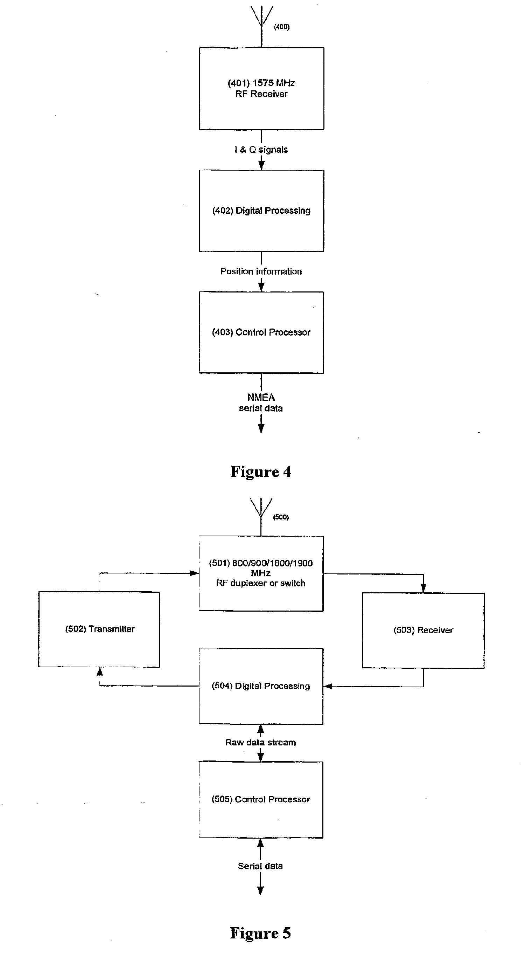

GPS locators are well known in the art. Figure 4 shows the basic functional blocks. An external antenna 400 is provided to the vehicle in a position to allow unimpeded GPS satellite coverage. The antenna feels an RF receiver 401 which operates at a frequency of typically 1595MHz and which provides the GPS I & Q signals to a digital processor 402. Processor 402 will, using various algorithms as are known in the art, determine position information which is provided to control processor 403.

The control processor 403 sends position information as NMEA serial data via an NMEA interface to the wireless modem 106 and to the navigation device 104.

### Wireless Modem

As for conventional AVL systems the in-vehicle systems communicate to the central server by radio. Preferably a cell phone network is used, although trunked radio, satellite, line of sight microwave links, WiFi, WiMax and other IEEE 802.11 wireless systems could be used.

Referring to Figure 5 the modem is shown including a preferably external aerial 500. The aerial 500 is connected to an RF duplexer to switch between receiver 503 and transmitter 502 which when a cell phone network is used for data communications with base will operate typically between 800-1900 MHz. The receiver 503 passes received data from base to a digital processor 504, which in turn passes raw data to a control processor 505. The control processor receives and provides data to an NMEA serial interface.

Data from the GPS locator received at the serial interface is passed through to a transmitter 502 which is connected to the aerial by the duplexer 501 on transmit.

In one preferred embodiment the GPS locator and modem and respective aerials are disclosed in US 6789013 the contents of which are incorporated herein by reference.

### Central Server

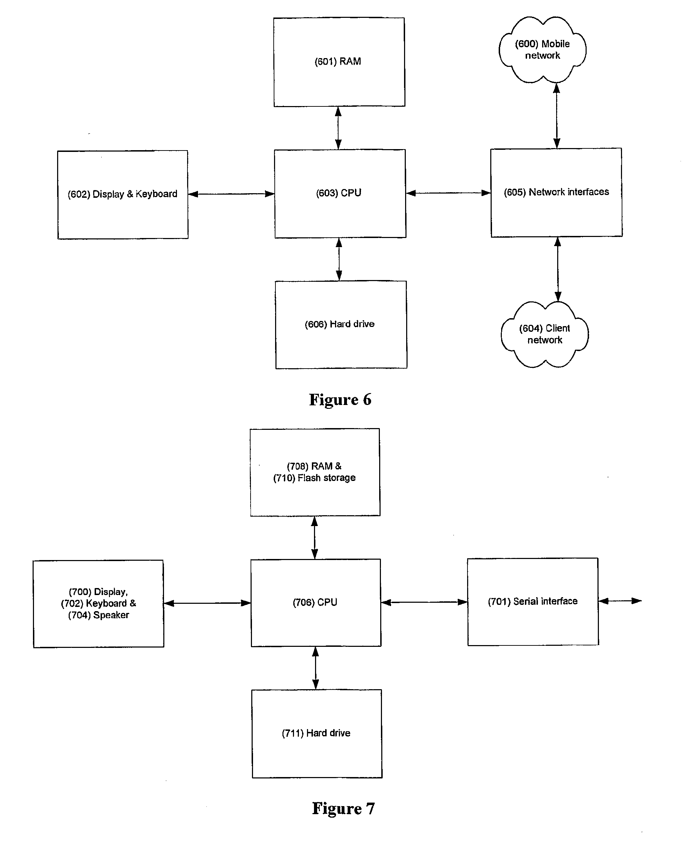

Referring to Figure 6 the base server comprises a processor 603 with associated memory 601 and hard drive 606; preferably a cellular network interface 605 for data communication with managed vehicles. The file server will include a database to store map, vehicle and message data on its hard drive 606.

The central server collates all the location data received from each vehicle managed by it which can be used with map data to obtain approximate street locations for each vehicle. The locations are stored in the vehicle database and are updated every time new information is received.

At least one client 604 is connected to the server. The client may be a separate or remote computer relative to the base server or it may be the same computer, but it is the interface for users at the base.

The client includes operator software and interfaces which allow a user to lookup a destination location on a map (stored in the map database) and send location data to a managed vehicle in a human and/or machine readable format. The software may be capable of selecting an appropriate vehicle to send to that location or it may be manually selected. The location data might be displayed at the vehicle although more preferably it is simply provided as data to be read by the vehicle navigation unit.

In one preferred embodiment the location data is generated by the user selecting from one or more points on the map. The map may be used to display a range of locations where for example there is goods to be picked up or dropped off. The client may automatically allocate a vehicle to a location depending on some criteria, for example "closest" or "quickest". The map displayed on the client computer screen also preferably displays the current location of vehicles managed. As well as allowing destination data and messages to be sent, the client may also display messages sent to the desired locations may be automatically generated or received by the central sever, manually entered through the client, or received through a message from a vehicle.

The data sent to the vehicle may include data to update the vehicles devices, for example, for updating the maps stored in the navigation device.

### Navigation Device

Referring to Figure 7 a navigation device is shown which typically includes a display 700, keyboard 702, speaker 704, processor 706, memory 708, non-volatile storage such as removable memory cards 710, harddrive 711, and a serial interface 701 for connection to the modem and/or GPS locator. It may also have an interface to allow connection to a PC to allow the transfer of map data.

The navigation device required in the present invention will receive vehicle position data from the GPS locator and thus need not itself include a GPS receiver. It could be a personal or car navigation device as well known in the art or alternatively the navigation functionality could be provided in a PDA (202) or mobile phone (204). In any case the network connection to the other vehicle located electronics in the system could be wireless or through a hardwired cradle connection within the vehicle.

### Operation

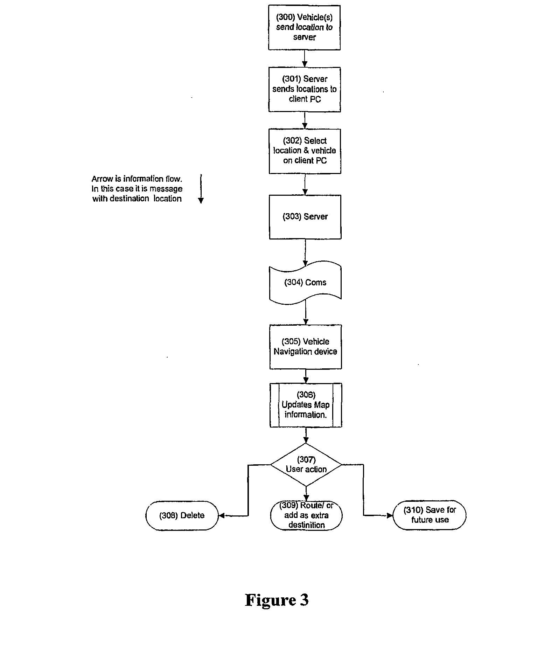

Referring to Figure 3 each vehicle provides its location to the server 300 and this is displayed on the client PC 301. A desired destination for a specific vehicle is entered into the system from the client PC application 302 by clicking on a displayed map or entering an address. A vehicle may be allocated to a single destination or to multiple destinations. The destination(s) sent to the server 303 and are in turn transmitted 304 through the wireless modem to the vehicle. The navigation device 305 then determines the destination and displays it 306 and/or provides navigation instructions along the route 309 and/or saves for future use 310.

### Location Software

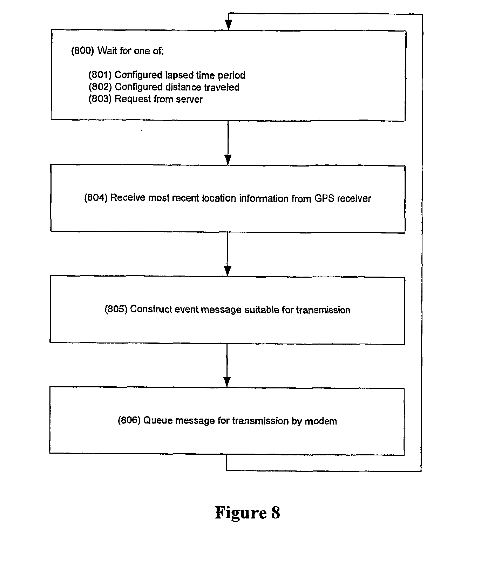

Referring to Figure 8 the process starts 800 when the vehicle ignition is energised, a certain distance travelled 802, time has lapsed 801 or server request 803 has been received, whereby the GPS obtains the current vehicle location 804. The GPS obtains coordinates by first running through a initiation procedure, followed by a polling period whilst attempting to acquire satellite coverage. Three or more satellites are required for an accurate location to be obtained including lat/long and altitude. The GPS provides additional information such as speed, heading, date and time which may also be used. The information is provided to the navigation device every second and is on forwarded to server as required.

### Modem Software

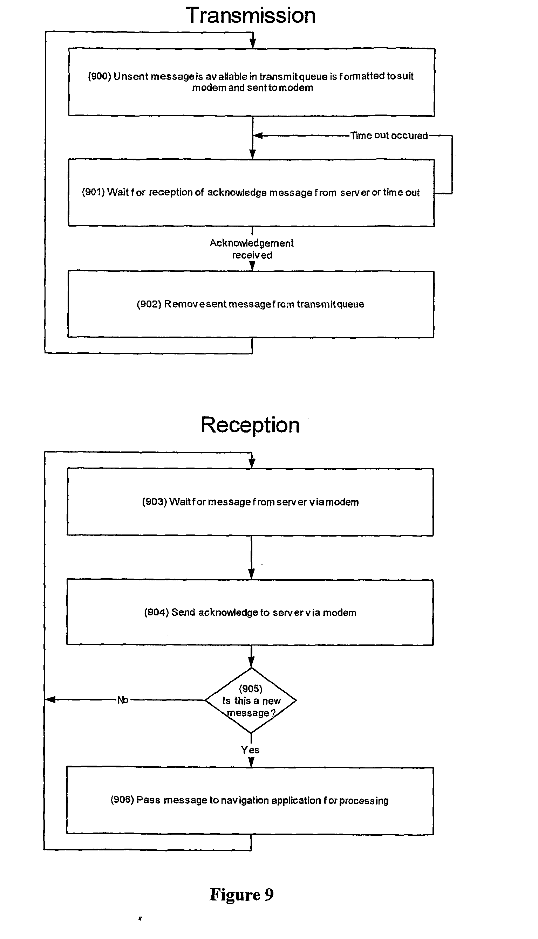

Referring to Figure 9 the modem initially confirms there is a valid communication channel, for example cellular coverage. It then connects through to the central server, and allows two way communications. When requested, or as configured, the modem passes messages 900 containing the vehicle identity and status location information, text messages and other events, and sends it to the server. The messages is saved until the server confirms reception 901 to allow retransmission if necessary, and then is removed 902. Each vehicle has a unique id to allow its information to be collated at the server.

The modem also receives information from the server 903 and then sends an acknowledgment 904 and check values or other data integrity measures are then verified 905 to check that the complete data transmission was received. If so, it is passed to the navigation device 906 through the serial interface. The navigation device then extracts the destination coordinate data, or other information from any messages to the vehicle and passed to the navigation device 906. The data may be encrypted prior to transmission.

### Client Management Software

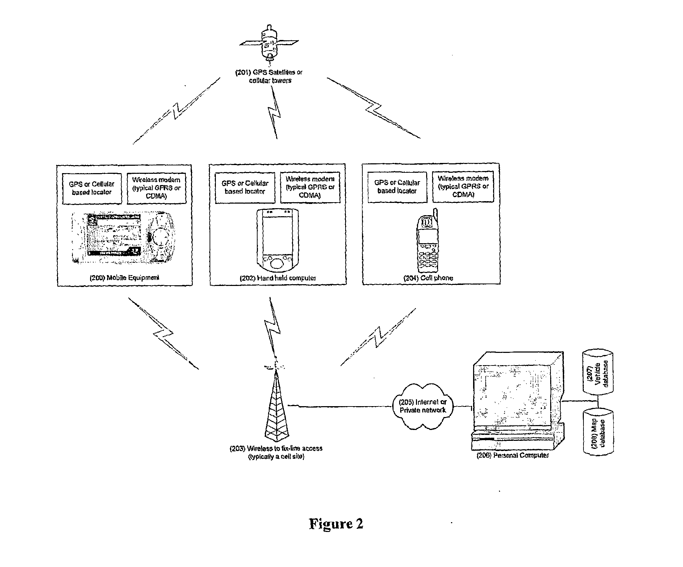

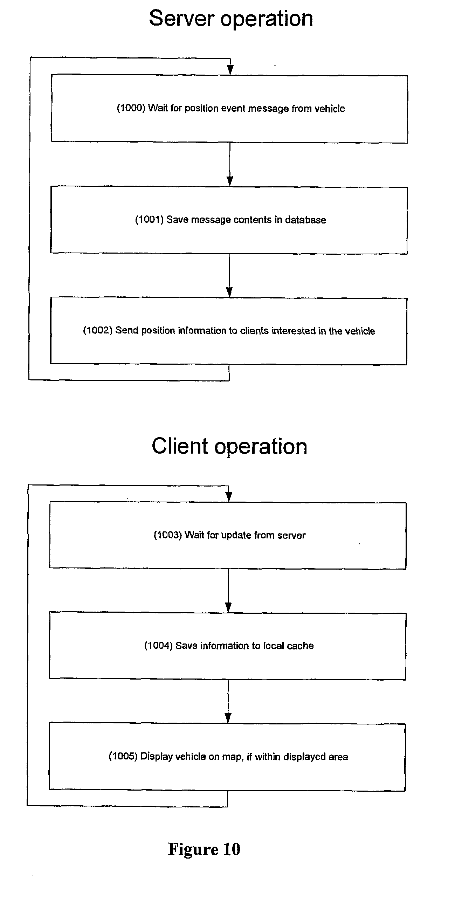

Software is provided both on the server and the client, or in the configuration of Figure 2, on a computer which provides both roles. Referring to Figure 10 the server accepts a communication link from each vehicle 1000, and receives data including identification and location information. The data is stored in the vehicle database 1001 and correlated with the map database.

The client receives the map data 1003 including vehicle location, which will be cached locally 1004. Desired destinations may be entered in at the client or otherwise appear on the map according to location 1005. Various schemes can be provided for allocating vehicles to destinations, including manually selecting a vehicle for each destination, and automatically allocating vehicles on a closest or quickest to arrive determination. Once allocated progress towards the destination can be indicated and dynamic switching between destinations or reordering may be provided.

The client also provides messaging and or other direct communications with the vehicle operator. A message can be sent by clicking on a vehicle, and any received messages appear referenced to the respective vehicle. The client can produce a range of reports on vehicle activity and my replay the locations over a selected period on a map. The configuration of the in vehicle equipment may be altered by the client and sent via the modem to the vehicle.

### Navigation Software

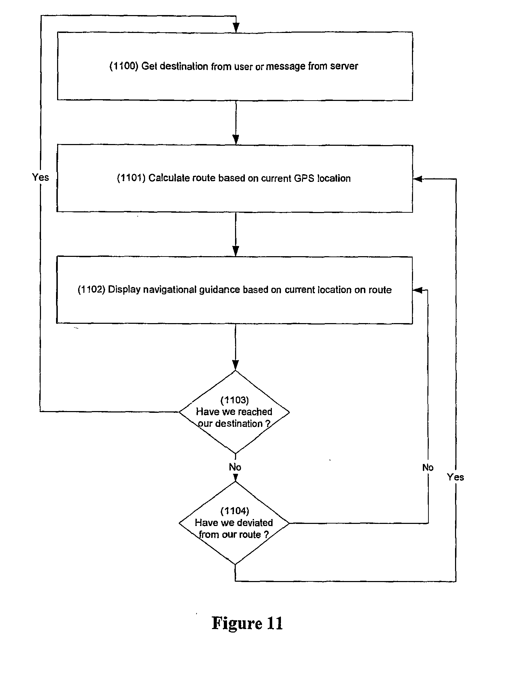

Referring to Figure 11 the navigation device includes functionality for navigating as is known in the art. It receives the desired destination or series of destinations 1100, and the current location. An algorithm is then used to determine a preferred route 1101 between current location and first destination, depending on selected criteria. For example, "quickest" or "shortest". Navigation assistance or instructions are provided at key points along the route 1102. Optionally with multiple destinations functionality may be provided to automatically or manually reorder the destinations. If the route is deviated from the initial route the unit can recalculate the preferred route 1104.

## Claims

1. An automatic vehicle location and navigation system comprising:
at a base location:
a base server (102); and
at least one server client (111) in communication with the base server, the at least one server client configured to:
receive vehicle position data from the base server;
display the vehicle position data to a user;
receive at least one desired vehicle destination from the user; and
transmit the at least one desired vehicle destination to the base server; and in at least one vehicle:
a position determining means (100) which provides an indication of the current position of said at least one vehicle,
a transmitter (106) which transmits said current position to said base server,
a receiver (106) which receives at least one desired destination for said vehicle from said base server, and
a navigation device (104) which receives as inputs said at least one desired destination from said receiver and said current position from said position
determining means,
said navigation device configured to determine a route from said current position to said at least one desired destination based on selected criteria.

2. A system as claimed in claim 1 wherein said navigation device (104) includes a display to indicate said route to the vehicle user.

3. A system as claimed in either of claims 1 or 2 wherein said at least one desired destination is related to said current location.

4. A system as claimed in claim 3 wherein said at least one desired destination is determined based on proximity to said current location.

5. A system as claimed in any one of claims 1 to 4 wherein said position determining means (100) comprises a Global Positioning System (GPS) receiver which provides the current latitude and current longitude.

6. A system as claimed in any one of claims 1 to 5 wherein said server (102) is configured to accept and forward messages to vehicles and navigation device (104) is configured to display messages intended for that vehicle.

7. A system as claimed in any one of claims 1 to 6 wherein said navigation device (104) is configured to determine the shortest or quickest route between said current location and said at least one desired destination.

8. A system as claimed in any one of claims 1 to 7 wherein a plurality of desired destinations are determined for a vehicle by a server client and said navigation device is configured to determine the shortest or quickest route from said current location to each desired destination.

9. A system as claimed in any one of claims 1 to 8 wherein said navigation device (104) is adapted to be remotely reconfigured on receipt of data received from said server client.

10. A method of despatching a vehicle comprising the steps of:
receiving vehicle position data at at least one server client (111) from a base server (102) in communication with the at least one server client, the base server and the at least one server client located at a base location;
displaying, on the at least one server client, the vehicle position data to a user;
receiving, at the at least one server client, at least one desired vehicle destination from the user;
the at least one server client transmitting the at least one desired vehicle destination to the base server;
the base server transmitting said at least one desired vehicle destination to said at least one vehicle,
displaying said desired vehicle destinations on a map in the vehicle,
calculating in the vehicle a route to the at least one desired destination based on selected criteria, and
displaying said route in the vehicle.

11. A method as claimed in claim 10 wherein a plurality of destinations are transmitted to said at least one vehicle and said method further comprises sorting the order of said destinations to minimise the distance or time of said route.

## Patentansprüche

1. Automatisches Fahrzeugortungs- und Navigationssystem, das Folgendes umfasst:
bei einer Basisposition:
einen Basis-Server (102) und
mindestens einen Server-Client (111) in Kommunikation mit dem Basis-Server, wobei der mindestens eine Server-Client für Folgendes konfiguriert ist:
Empfangen von Fahrzeugpositionsdaten vom Basis-Server;
Anzeigen der Fahrzeugpositionsdaten für einen Benutzer;
Empfangen mindestens eines gewünschten Fahrzeugzielorts vom Benutzer, und
Senden des mindestens einen gewünschten Fahrzeugzielorts zum Basis-Server, und
in mindestens einem Fahrzeug:
ein Positionsbestimmungsmittel (100), das die aktuelle Position des mindestens einen Fahrzeugs anzeigt,
einen Sender (106), der die aktuelle Position zum Basis-Server sendet,
einen Empfänger (106), der mindestens einen gewünschten Zielort für das Fahrzeug vom Basis-Server empfängt, und
ein Navigationsgerät (104), das den mindestens einen gewünschten Zielort von dem Empfänger sowie die aktuelle Position von dem
Positionsbestimmungsmittel als Eingaben empfängt,
wobei das Navigationsgerät dafür konfiguriert ist, eine Route von der aktuellen Position zu dem mindestens einen gewünschten Zielort auf der Grundlage der ausgewählten Kriterien zu ermitteln.

2. System nach Anspruch 1, wobei das Navigationsgerät (104) eine Anzeige zur Anzeige der Route für den Fahrzeugbenutzer umfasst.

3. System nach einem der Ansprüche 1 oder 2, wobei der mindestens eine gewünschte Zielort mit der aktuellen Position in Beziehung steht.

4. System nach Anspruch 3, wobei der mindestens eine gewünschte Zielort basierend auf der Nähe zu der aktuellen Position ermittelt wird.

5. System nach einem der Ansprüche 1 bis 4, wobei das Positionsbestimmungsmittel (100) einen Empfänger des globalen Positionierungssystems (GPS) umfasst, der die aktuellen Breiten- und Längengrade bereitstellt.

6. System nach einem der Ansprüche 1 bis 5, wobei der Server (102) so konfiguriert ist, dass er Meldungen an Fahrzeuge annimmt und weiterleitet und das Navigationsgerät (104) so konfiguriert ist, dass es Nachrichten anzeigt, die für dieses Fahrzeug bestimmt sind.

7. System nach einem der Ansprüche 1 bis 6, wobei das Navigationsgerät (104) so konfiguriert ist, dass es die kürzeste oder schnellste Route zwischen der aktuellen Position und dem mindestens einen gewünschten Zielort bestimmt.

8. System nach einem der Ansprüche 1 bis 7, wobei ein Server-Client eine Vielzahl von gewünschten Zielen für ein Fahrzeug ermittelt und das Navigationsgerät so konfiguriert ist, dass es die kürzeste oder schnellste Route von der aktuellen Position zu jedem gewünschten Zielort ermittelt.

9. System nach einem der Ansprüche 1 bis 8, wobei das Navigationsgerät (104) dafür ausgelegt ist, bei Empfang von Daten, die von dem Server-Client empfangen werden, aus der Ferne neu konfiguriert zu werden.

10. Verfahren zum Abfertigen eines Fahrzeugs, das folgende Schritte umfasst:
Empfangen von Fahrzeugpositionsdaten bei mindestens einem Server-Client (111) von einem Basis-Server (102), der mit dem mindestens einen Server-Client in Kommunikation steht, wobei sich der Basis-Server und der mindestens eine Server-Client an einem Basis-Ort befinden;
Anzeigen der Fahrzeugpositionsdaten für einen Benutzer auf dem mindestens einen Server-Client;
Empfangen mindestens eines gewünschten Fahrzeugzielorts von dem Benutzer an dem mindestens einen Server-Client;
wobei der mindestens eine Server-Client den mindestens einen gewünschten Fahrzeugzielort zum Basis-Server sendet;
wobei der Basis-Server den mindestens einen gewünschten Fahrzeugzielort zu dem mindestens einen Fahrzeug sendet;
Anzeigen der gewünschten Fahrzeugziele auf einer Karte im Fahrzeug,
Berechnen im Fahrzeug einer Route zu dem mindestens einen gewünschten Zielort basierend auf ausgewählten Kriterien und
Anzeigen der Route in dem Fahrzeug.

11. Verfahren nach Anspruch 10, wobei eine Vielzahl von Zielorten zu dem mindestens einen Fahrzeug gesendet wird und das Verfahren ferner das Sortieren der Reihenfolge der Zielorte umfasst, um die Entfernung oder die Fahrzeit der Route zu minimieren.

## Revendications

1. Système automatique de localisation et de navigation pour véhicules, comprenant :
au niveau d'une localisation de base :
un serveur de base (102) ; et
au moins un serveur client (111) en communication avec le serveur de base, ledit au moins un serveur client étant configuré de façon à :
recevoir des données de position de véhicule à partir du serveur de base ;
présenter, à un utilisateur, l'affichage des données de position de véhicule ;
recevoir, à partir de l'utilisateur, au moins une destination désirée du véhicule ; et
transmettre ladite au moins une destination désirée du véhicule
vers le serveur de base ; et
dans au moins un véhicule :
des moyens de détermination de position (100) qui procurent une indication de la position actuelle dudit au moins un véhicule,
un émetteur (106) qui transmet ladite position actuelle audit serveur de base,
un récepteur (106) qui reçoit, à partir dudit serveur de base, au moins une destination désirée pour ledit véhicule, et
un dispositif de navigation (104) qui reçoit, sous la forme de saisies,
ladite au moins une destination désirée à partir dudit récepteur, et ladite
position actuelle à partir desdits moyens de détermination de position,
ledit dispositif de navigation étant configuré de façon à déterminer un itinéraire à partir de ladite position actuelle jusqu'à ladite au moins une destination désirée sur la base de critères sélectionnés.

2. Système selon la revendication 1, ledit dispositif de navigation (104) englobant un affichage pour indiquer ledit itinéraire à l'utilisateur du véhicule.

3. Système selon l'une des revendications, soit la revendication 1 soit la revendication 2, ladite au moins une destination désirée étant liée à ladite localisation actuelle.

4. Système selon la revendication 3, ladite au moins une destination désirée étant déterminée sur la base de la proximité par rapport à ladite localisation actuelle.

5. Système selon l'une quelconque des revendications 1 à 4, lesdits moyens de détermination de position (100) comprenant un récepteur de système de positionnement à capacité globale (GPS) lequel procure la latitude actuelle et la longitude actuelle.

6. Système selon l'une quelconque des revendications 1 à 5, ledit serveur (102) étant configuré de façon à accepter et à réacheminer des messages vers des véhicules, et le dispositif de navigation (104) étant configuré de façon à afficher des messages destinés à ce véhicule.

7. Système selon l'une quelconque des revendications 1 à 6, ledit dispositif de navigation (104) étant configuré de façon à déterminer l'itinéraire le plus court ou le plus rapide entre ladite localisation actuelle et ladite au moins une destination désirée.

8. Système selon l'une quelconque des revendications 1 à 7, une pluralité de destinations désirées étant déterminée pour un véhicule par un serveur client, et ledit dispositif de navigation étant configuré de façon à déterminer l'itinéraire le plus court ou le plus rapide à partir de ladite localisation actuelle vers chaque destination désirée.

9. Système selon l'une quelconque des revendications 1 à 8, ledit dispositif de navigation (104) étant conçu pour être reconfiguré à distance lors de la réception de données reçues en provenance dudit serveur client.

10. Procédé permettant de suivre le parcours d'un véhicule, comprenant les étapes consistant à :
recevoir, au niveau d'au moins un serveur client (111), des données de position de véhicule à partir d'un serveur de base (102) en communication avec ledit au moins un serveur client, le serveur de base et ledit au moins un serveur client étant positionnés au niveau d'une localisation de base ;
présenter, à un utilisateur, l'affichage des données de position de véhicule sur ledit au moins un serveur client ;
recevoir, au niveau dudit au moins un serveur client, au moins une destination désirée du véhicule à partir de l'utilisateur ;
faire transmettre audit au moins un serveur client ladite au moins une destination désirée du véhicule vers le serveur de base ;
faire transmettre au serveur de base ladite au moins une destination désirée du véhicule vers ledit au moins un véhicule,
afficher lesdites destinations désirées du véhicule sur une carte dans le véhicule, calculer, dans le véhicule, un itinéraire jusqu'à ladite au moins une destination désirée sur la base de critères sélectionnés, et
afficher ledit itinéraire dans le véhicule.

11. Procédé selon la revendication 10, une pluralité de destinations étant transmise audit au moins un véhicule et ledit procédé comprenant en outre l'opération consistant à trier l'ordre desdites destinations afin de minimiser la distance ou la durée dudit itinéraire.
